(19) Europäisches Patentamt
European Patent Office
Office européen des brevets

(11) Veröffentlichungsnummer: **0 002 517**
**B1**

(12) # EUROPÄISCHE PATENTSCHRIFT

(45) Veröffentlichungstag der Patentschrift: **20.05.81**

(51) Int. Cl.³: **C 25 D 13/06**, C 08 L 63/00, C 08 G 14/06

(21) Anmeldenummer: **78101645.6**

(22) Anmeldetag: **12.12.78**

(54) **Lackbindemittel und ihre Verwendung für die kathodische Elektrotauchlackierung.**

(30) Priorität: **15.12.77 DE 2755906**

(43) Veröffentlichungstag der Anmeldung: **27.06.79 Patentblatt 79/13**

(45) Bekanntmachung des Hinweises auf die Patenterteilung: **20.05.81 Patentblatt 81/20**

(84) Benannte Vertragsstaaten: **BE CH DE FR GB IT NL SE**

(56) Entgegenhaltungen:
**FR-A-2 103 960**
**FR-A-2 226 445**
**FR-A-2 268 051**
**FR-A-2 324 697**
**FR-A-2 333 838**

(73) Patentinhaber: **BASF Aktiengesellschaft, Carl-Bosch-Strasse 38, D-6700 Ludwigshafen (DE)**

(72) Erfinder: **Kempter, Fritz Erdmann, Dr., L 2,14,, D-6800 Mannheim (DE)**
Erfinder: **Schupp, Eberhard, Dr., Tilsiter Weg 4, D-6830 Schwetzingen (DE)**

**EP 0 002 517 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

# Lackbindemittel und ihre Verwendung für die kathodische Elektrotauchlackierung

Die vorliegende Erfindung betrifft Lackbindemittel, die durch Umsetzung von Mannichbasen und Epoxidharzen erhalten worden sind, sowie deren Verwendung in ihrer durch Protonierung mit einer Säure erhältlichen wasserverdünnbaren Form als kationische Elektrotauchlackbindemittel.

Es sind schon eine Reihe von kationischen Elektrotauchlackbindemittelsystemen vorgeschlagen worden, z. B. in DE-A 20 33 770, DE-A 21 63 143, DE-A 20 57 799, DE-A 19 30 949 und DE-A 22 52 536, die beispielsweise im Hinblick auf Korrosionsschutz oder Umgriff gute Ergebnisse zeigen, die jedoch, was die Gesamtheit der Bindemitteleigenschaften angeht, nicht befriedigen.

Ein wesentlicher Mangel der bekannten Systeme ist unter anderem, daß sie sich nicht bei dem in der anodischen Elektrotauchlackierung verwendeten pH-Bereich zwischen pH 7 und 9 verarbeiten lassen (vgl. auch »Electrodeposition of Coatings«, Advances in Chemistry Series 119, S. 110 bis 127, American Chemical Society, Washington 1973 und Industrial Finishing, Vol. 49, Nr. 8, 1973, S. 18 bis 23).

Ein weiterer Nachteil ist, daß die angegebenen Vernetzungsreaktionen nicht auf den erwünschten pH-Bereich abgestimmt sind und nur mäßige Badstabilitätseigenschaften beobachtet werden, was z. T. zur Folge hat, daß die Badtemperaturen niedrig, beispielsweise <25°C, gehalten werden müssen, eine Maßnahme, die einen höheren Kühlaufwand erforderlich macht.

In den DE-A 23 20 301, 23 57 075, 24 19 179 und 25 54 080 sind kationische Elektrotauchlack-Bindemittel beschrieben, die sich unter anderem durch sehr guten Korrosionsschutz auszeichnen und im alkalischen pH-Bereich über 7 abgeschieden werden können. Es handelt sich um Umsetzungsprodukte von Mannich-Basen aus kondensierten Phenolen, sekundären Aminen und Formaldehyd mit Epoxidharzen.

Ein Nachteil dieser Bindemittel ist es, daß sie nicht in allen Fällen mit den zur Lackherstellung üblichen Pigmenten und Füllstoffen direkt verarbeitet werden können, sondern daß die Pigmente und Füllstoffe mit geeigneten Netzmitteln in einem vorgeschalteten Schritt behandelt werden müssen.

Der vorliegenden Erfindung lag daher die Aufgabe zugrunde, Lackbindemittel und insbesondere kationische Elektrotauchlackbindemittel aufzuzeigen, die gegenüber dem bekannten Stand der Technik wesentliche Verbesserungen aufweisen und in ihren Eigenschaften, insbesondere hinsichtlich der Benetzungsfähigkeit gegenüber Pigmenten und Füllstoffen den an sie gestellten Anforderungen gerecht werden.

Gegenstand der vorliegenden Erfindung ist ein im wesentlichen epoxidgruppenfreies Lackbindemittel, erhalten durch Umsetzung von

(A) Mannich-Basen aus
- ($a_1$) mindestens einem äthergruppenfreien kondensierten Phenol, das mindestens zwei phenolische Hydroxylgruppen pro Molekül enthält,
- ($a_3$) mindestens einem sekundären Amin, das mindestens eine Hydroxyalkylgruppe enthält, oder einem Gemisch aus einem derartigen sekundären Amin mit einem anderen sekundären Amin und
- ($a_4$) Formaldehyd oder einer Formaldehyd liefernden Verbindung

mit

(B) mindestens einem Epoxidharz,

das dadurch gekennzeichnet ist, daß zur Herstellung der Mannich-Basen (A) zusätzlich mindestens ein olefinische Doppelbindungen und mindestens eine

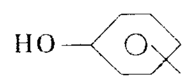 -Gruppe

pro Molekül enthaltendes Butadien- oder Isopren-homo- oder -copolymerisat ($a_2$) mitverwendet wird, wobei das der Komponente ($a_2$) zugrundeliegende Butadien- oder Isoprenhomo- oder -copolymerisat ein mittleres Molekulargewicht zwischen 500 und 6000 aufweist, die Komponenten ($a_1$) und ($a_2$) im Verhältnis 1 : 0,05 bis 1 : 6 eingesetzt werden und das Lackbindemittel durch Umsetzung von 40 bis 90 Gew.-% der Komponente (A) mit 10 bis 60 Gew.-% der Komponente (B) erhalten wird und 0 bis 40 Gew.-% eines oder mehrerer weiterer Lackbindemittel enthält und sich die Gew.-% jeweils auf die Summe der Komponenten (A) und (B) beziehen.

Bevorzugt sind insbesondere solche Lackbindemittel, die als Komponente ($a_2$) ein Umsetzungsprodukt enthalten, das aus einem Butadienmono- oder -copolymerisat eines mittleren Molekulargewichts zwischen 500 und 6000, vorzugsweise einem 1,2-Doppelbindungen enthaltenden Polybutadienöl und einem mehrkernigen Phenol der allgemeinen Formel

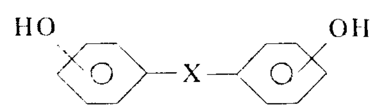

wobei die Hydroxylgruppen in ortho- und/oder para-Stellung zu X stehen und X einen geradkettigen oder verzweigten zweiwertigen aliphatischen Rest mit 2 bis 8 Kohlenstoffatomen bedeutet, in Gegenwart eines sauren Katalysators erhalten worden ist.

Besonders vorteilhaft ist es, die erfindungsgemäßen Lackbindemittel in üblicher Weise mit einer Säure zu protonieren.

Gegenstand der Erfindung ist außerdem die Verwendung der erfindungsgemäßen Lackbindemittel in ihrer protonierten Form für die kathodische Elektrotauchlackierung elektrisch leitender Oberflächen.

Ein besonderer Vorzug der erfindungsgemäßen kationischen Elektrotauchlackbindemittel ist es, daß sie zu iherer elektrophoretischen Verarbeitung in der üblichen Weise nur mit besonders geringen Mengen einer Säure, z. B. bevorzugt Essigsäure (1,0 bis 2,0 Gew.-%, bezogen auf Festharz) protoniert zu werden brauchen, um stabile Dispersionen oder kolloidale Dispersionen mit bevorzugten pH-Werten zwischen 7,0 und 10,0 zu ergeben.

Ein zusätzlicher besonderer Vorzug der aus den erfindungsgemäßen Bindemitteln hergestellten Lackfilme ist ihre Lösungsmittelfestigkeit, die hohe Härte und Elastizität sowie der ausgezeichnete Korrosionsschutz auf mit Zink- und Eisenphosphat vorbehandelten Eisenblechen.

Als weiterer überraschende· Vorteil der erfindungsgemäßen olefinische Doppelbindungen enthaltenden Lackbindemittel sind die guten Benetzungseigenschaften der Bindemittel bei der Anreibung der Pigmente oder Füllstoffe, besonders der protonierten Bindemittel in wäßrigem Medium und die gute Verträglichkeit der Bindemittel, z. B. mit Polyoelen, wie sie in DE-A 26 36 797 beschrieben sind, zu nennen. Außerdem weisen die erfindungsgemäßen Bindemittel ein besonders ausgeglichenes Abscheidungsverhalten auf einer Vielzahl verschiedener bzw. verschieden vorbehandelter Metalle auf.

Bezüglich der für die Herstellung der erfindungsgemäßen Elektrotauchlackbindemittel verwendeten Komponenten ist im einzelnen folgendes auszuführen:

(A) Herstellung der Mannich-Base

($a_1$) Als äthergruppenfreie kondensierte Phenole, die mindestens zwei phenolische Hydroxylgruppen pro Molekül enthalten, kommen mehrwertige Phenole in Frage, die einen oder mehrere aromatische Reste enthalten, vorzugsweise Bisphenol A oder Novolake.

Besonders geeignet als Komponente ($a_1$) sind Phenole der allgemeinen Formel

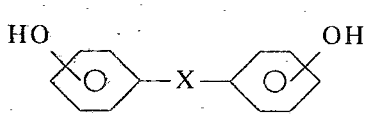

wobei die OH-Gruppen in ortho- und/oder para-Stellung zu X stehen, und X für einen geradkettigen oder verzweigten zweiwertigen aliphatischen Rest mit 1 bis 3 Kohlenstoffatomen oder für $>SO_2$, $>SO$, $>C=O$ und $-O-$ steht; vorzugsweise geeignet ist Bisphenol A. Weiterhin geeignet sind die Alkylderivate oben genannter kondensierter Phenole.

Zur Herstellung der erfindungsgemäßen Lackbindemittel eignet sich als Komponente ($a_1$) auch ein Mannichkondensationsprodukt aus mindestens einem Phenol und/oder Alkylphenol, primärem Amin und Formaldehyd oder Formaldehyd liefernder Verbindung, wie in der DE-A 27 11 385 beschrieben.

Geeignete Phenole zur Herstellung dieser Mannichkondensationsprodukte sind Phenol oder Alkylphenole, vorzugsweise Monoalkylphenole mit 1 bis 18, insbesondere 3 bis 12 Kohlenstoffatomen im geradkettigen, verzweigten oder cyclischen Alkylrest, wie Hexyl-, Nonyl-, Dodecyl-, tert.-Butyl- und Phenyl-phenol. Nonylphenol (z. B. auch technisches Nonylphenol mit 85% 4-Nonylphenol) und p-tert.-Butylphenol sowie Gemische dieser Alkylphenole mit Phenol sind bevorzugt. Auch 3-Alkylenphenole, wie z. B. das aus Cashew-Nußschalenöl gewinnbare ®Cardanol, sind geeignet. Ein Teil des unsubstituierten Phenols kann auch durch Bisphenol A ersetzt sein. Als primäre Amine kommen in Frage Monoalkylamine mit 2 bis 13, vorzugsweise 2 bis 6 Kohlenstoffatomen im geradkettigen, verzweigten oder cyclischen Alkylrest, wie Butyl-, Hexyl-, Octyl-Amin sowie hydroxyl- und alkoxysubstituierte Monoalkylamine, wie Monoäthanolamin und Monoisopropanolamin, 2-Alkoxyäthylamine, wie 2-Methoxyäthylamin und 2-Äthoxyäthylamin sowie Gemische dieser genannten Amine.

Zur Herstellung dieser als Komponente ($a_1$) verwendbaren Mannichkondensationsprodukte werden (Alkyl-)Phenol, primäre Amine und Formaldehyd oder Formaldehyd liefernde Verbindung zweckmäßigerweise in solchen Mengen miteinander umgesetzt, daß auf 2 Mole (Alkyl-)Phenol mindestens 1 Mol des primären Amins kommen, entsprechend einer Mindestmenge von 2 Molen Formaldehyd.

Als Komponente ($a_1$) eignen sich außerdem phenolgruppen-enthaltende Indanderivate gemäß US-A 2 979 534, wie

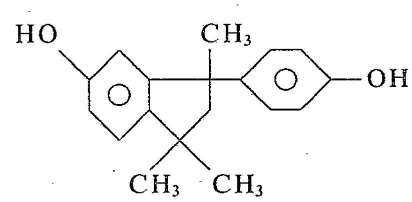

($a_2$) Als Komponente ($a_2$) werden erfindungsgemäß mindestens eine

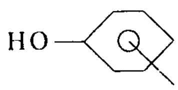
-Gruppe

pro Molekül enthaltende Butadien- oder Isoprenhomo- oder -copolymerisate verwendet, wobei das zugrundeliegende Butadien- oder Isoprenhomo- oder copolymerisat ein mittleres Molekulargewicht zwischen 500 und 6000 aufweist.

Derartige Produkte werden zweckmäßigerweise durch Umsetzung von Butadien- oder Isopren-homo- oder -copolymerisaten mit mehrkernigen Phenolen der allgemeinen Formel

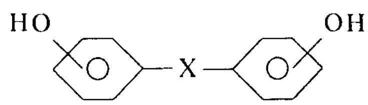

wobei X einen geradkettigen oder verzweigten zweiwertigen aliphatischen Rest mit 2 bis 8 Kohlenstoffatomen bedeutet, in Gegenwart saurer Katalysatoren, wie z. B. Sulfonsäuren wie p-Toluolsulfonsäure und Lewissäuren bei Temperaturen von 150 bis 250, vorzugsweise 160 bis 190° C erhalten.

Für die Herstellung der Komponente ($a_2$) geeignete Polymerisate sind Polybutadien, Polyisopren, Mischpolymerisate des Butadiens, z. B. solche mit Styrol, die mindestens 50 Gew.-% Butadien einpolymerisiert enthalten, vorzugsweise Polybutadienöle, die 1,2-Doppelbindungen sowie gegebenenfalls 1,4-Doppelbindungen enthalten. Die mittleren Molekulargewichte der bevorzugt geeigneten Polybutadienöle liegen zwischen 600 und 6000, insbesondere zwischen 900 und 3000. Der Gehalt dieser Polybutadienöle an 1,2- und 1,4-Doppelbindungen kann in weiten Grenzen schwanken. In Frage kommen beispielsweise Polybutadienöle mit 20 bis 40% 1,2-Doppelbindungen und 70 bis 80% 1,4-Doppelbindungen mit ca. 40 bis 50% trans- und ca. 20 bis 30% cis-Struktur oder solche mit 40 bis 50% 1,2-Doppelbindungen und 50 bis 60% 1,4-Doppelbindungen mit 15 bis 25% trans-, 10 bis 20% cis- und 15 bis 20% cyclischer Struktur, oder Polybutadienöle mit ca. 20% 1,2-Doppelbindungen und ca. 80% 1,4-Doppelbindungen mit ca. 60% trans- und ca. 20% cis-Struktur sowie Polybutadienöle mit mehr als 90% 1,2-Doppelbindungen und weniger als 10% 1,4-Doppelbindungen. Ebenfalls geeignet sind Polybutadienöle, die andere funktionelle Gruppen, z. B. OH-Gruppen, enthalten.

Bei der Umsetzung der 1,2-Doppelbindungen enthaltenden Polybutadienöle mit mehrwertigen Phenolen der oben angeführten Formel ist bei saurer Katalyse als intermediär auftretendes Agens

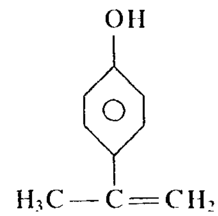

anzunehmen.

Das bei der Reaktion entstehende Phenol wird durch Destillation entfernt, kann aber auch einer erneuten Reaktion zugeführt werden; z. B. erneute Kondensation zum Bisphenol A oder Umsetzungen, wie sie vorstehend in der DE-A 27 11 385 beschrieben sind.

Die Polybutadienöle werden mit den mehrkernigen Phenolen der angegebenen Formel im allgemeinen in einem Mengenverhältnis von 1 : 0,2 bis 1 : 8, vorzugsweise 1 : 0,5 bis 1 : 3 umgesetzt.

Besonders bevorzugt als Komponente ($a_2$) sind Umsetzungsprodukte aus Polybutadienöl und Bisphenol A.

Die Phenolgruppen enthaltende Komponente ($a_2$) kann auch im Anschluß an ihre Herstellung durch Weiterreaktion (thermische Polymerisation und/oder Cyclisierung) verändert werden. Diese Weiterreaktion in Anwesenheit oder unter Ausschluß von Sauerstoff, wird zweckmäßigerweise bei Temperaturen von 120 bis 200° C durchgeführt.

Der Erweichungspunkt bzw. Erweichungsbereich der Komponente ($a_2$) kann in relativ weiten Grenzen schwanken. Entsprechend den Erweichungspunkten von bevorzugt 25 bis 100° C handelt es sich bei den Phenolderivaten ($a_2$) um bei Raumtemperatur zähflüssige bis feste Substanzen.

Zur Herstellung der Komponente ($a_2$) genügen bereits geringe Mengen eines sauren Katalysators (0,02 bis 0,5, vorzugsweise 0,04 bis 0,25 Gew.-%, bezogen auf Gesamtansatz). Dadurch erübrigt sich eine anschließende Entfernung des Katalysators, da er bei Herstellung oder Verarbeitung des erfindungsgemäßen Bindemittels ohne Einfluß auf die Eigenschaften bleibt.

Die Komponente ($a_2$) enthält meistens nach der Destillation geringe Phenol- bzw. Bisphenol-Anteile (<10%); im allgemeinen ist es jedoch nicht notwendig, diese Restmengen durch destillation zu entfernen.

Als Komponente ($a_2$) eignen sich ferner die Umsetzungsprodukte aus Epoxidgruppen enthaltenden Ölen und/oder Polybutadienölen mit Phenolen und/ oder mehrkernigen Phenolen, wie z. B. Bisphenol. Diese Produkte unterscheiden sich jedoch von den oben beschriebenen durch einen wesentlichen Gehalt an Äthergruppen. Komponente ($a_2$) enthält olefinische Doppelbindungen.

($a_3$) Als sekundäre Amine ($a_3$), die mindestens eine Hydroxyalkylgruppe enthalten, eignen sich beispielsweise Alkyläthanolamine oder Alkylisopropanolamine mit 1 bis 6 Kohlenstoffatomen in der Alkylgruppe. Bevorzugt sind jedoch Dialkanolamine, insbesondere Diäthanolamin sowie Gemische dieser (Di-) Alkanolamine mit anderen sekundären Aminen.

Die sekundären Amine ($a_3$), in den Mannich-Basen (A) als Diäthanolaminomethylgruppen und Alkyläthanolaminomethylgruppen eingebaut, sind für den Grad der Dispergierbarkeit der Bindemittel in dem gewünschten pH-Bereich von 6,0 bis 10,0 und für die Vernetzung des Systems von wesentlicher Bedeutung.

Als sekundäre Alkylamine, die gegebenenfalls zusammen mit den Hydroxyalkylgruppen-haltigen Aminen für die Herstellung der Mannich-Basen (A) eingesetzt werden, eignen sich solche der allgemeinen Formel

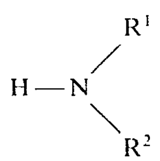

wobei $R^1$ und $R^2$ gleich oder verschieden sind und für einen geradkettigen oder verzweigten aliphatischen Rest mit 1 bis 14 Kohlenstoffatomen, der gegebenenfalls Alkoxygruppe enthält, stehen. Derartige geeignete sekundäre Amine sind beispielsweise Di-n-butylamin, Di-n-propylamin, Diisopropylamin, Di-n-pentylamin, Di-n-hexylamin, Di-n-octylamin, Di-2-äthylhexylamin und Di-2-alkoxy-äthylamine, wie z. B. Di-2-methoxy-, Di-2-äthoxy- oder Di-2-butoxy-äthylamin, sowie solche, in denen $R^1$ und $R^2$ zu einem Ring verknüpft sind, wie z. B. Morpholin oder Piperidin. Bevorzugt geeignet sind von diesen gegebenenfalls mitzuverwendenden sekundären Aminen Di-n-butyl-amin, Di-n-hexylamin und Di-n-octylamin, Di-2-äthylhexylamin sowie Di-2-alkoxy-äthylamine und ihre Gemische. Die Wirkungsweise dieser sekundären Amine ($a_3$) besteht vornehmlich in der Beeinflussung der Stabilitätseigenschaften der Bindemittel, außerdem tragen sie zum Verlauf und zur »inneren Weichmachung« der aus den Bindemitteln hergestellten Lackschichten bei.

Die sekundären Amine ($a_3$) können, u. a. bedingt durch ihre Herstellungsweise, auch Anteile entsprechender primärer Amine enthalten, doch sollte deren Anteil im allgemeinen 10 Gew.-% des sekundären Amins nicht übersteigen.

($a_4$) Als Formaldehyd bzw. Formaldehyd liefernde Verbindungen werden vorzugsweise alkoholische, wie z. B. butanolische Formaldehydlösungen oder Paraformaldehyd oder deren Gemische verwendet.

Die Herstellung der Mannich-Basen (A) erfolgt nach den üblichen in der Literatur angegebenen Methoden, wie z. B. Houben-Weyl, Methoden der organischen Chemie, Band XI/1, Seite 731, 1957, zu entnehmen ist. Die Wahl der Lösungsmittel wird den geänderten Polaritätsverhältnissen angepaßt. Es ist zweckmäßig, höhere Alkohole, Cycloaliphaten oder Alkylaromaten neben polareren Lösungsmitteln mitzuverwenden.

Die Mengenverhältnisse der eingesetzten Ausgangsstoffe ergeben sich aus den jeweils angestrebten Eigenschaften, wobei das Gewichtsverhältnis der Komponente ($a_1$) zur Komponente ($a_2$) 1 : 0,05 bis 1 : 6, bevorzugt 1 : 0,3 bis 1 : 3 und das Gewichtsverhältnis der sekundären hydroxylgruppenhaltigen Amine zu anderen sekundären Alkylaminen 3 : 1 bis 1 : 3 betragen kann.

Die Mengenverhältnisse der Ausgangsstoffe ($a_1$), ($a_2$) und ($a_3$) werden zur Herstellung der Mannich-Base (A) zweckmäßigerweise so gewählt, daß auf jedes Äquivalent phenolischer Hydroxylgruppen des Gemisches der Komponenten ($a_1$) und ($a_2$) etwa 0,3 bis 2,0, vorzugsweise 0,5 bis 1,5 Mole der Komponente ($a_3$) kommen.

Die zur Herstellung der Mannich-Base (A) einzusetzende Menge an ($a_4$) beträgt mindestens 1 Mol, bezogen auf 1 Mol ($a_3$).

Durch Variation der Mengenverhältnisse der sekundären Amine lassen sich die Elektrotauchbad- und Schicht-Eigenschaften wunschgemäß beeinflussen: Über das gewählte Mengenverhältnis Diäthanolamin bzw. Alkyläthanolamin und Di-n-butylamin, Di-n-hexylamin, Di-2-äthylhexylamin, Di-n-octylamin und Di-2-alkoxyäthylamin können die Dispergierbarkeit des Bindemittels, die Reaktivität, Verlaufseigenschaten, Vernetzung, Elastizität sowie der Korrosionsschutz eingestellt werden.

Eine besonders bevorzugte Ausführungsform der vorliegenden Erfindung besteht darin, daß die Herstellung der Mannich-Basen mit einer formaldehydliefernden Verbindung, z. B. Paraformaldehyd, in Mengen, die dem verwendeten

Aminanteil praktisch äquivalent sind, im allgemeinen jedoch einen 25%igen Überschuß nicht überschreiten, in einem Alkohol, wie Isopropanol oder Isobutanol, durchgeführt wird und daß die Komponente (A) direkt, d. h. ohne nachfolgende Umsetzung mit weiterem Formaldehyd mit der Komponente (B) zur Reaktion gebracht wird.

Im allgemeinen wird die Umsetzung der Komponente (A) mit der Komponente (B) so gesteuert, daß die entstehenden erfindungsgemäßen Bindemittel mittlere Molekulargewichte von 800 bis 5000, vorzugsweise 1000 bis 3000, aufweisen.

Die Umsetzung der Komponente (A) mit der Komponente (B) erfolgt im allgemeinen bei Temperaturen von 20 bis 100°C, vorzugsweise von 60 bis 80°C, bevorzugt in organischen Lösungsmitteln, wie z. B. Alkoholen mit 3 bis 16 Kohlenstoffatomen in der Alkylgruppe und Glykoläthern sowie Alkylaromaten wie Toluol usw. und Cycloaliphaten.

Die Mannich-Basen (A) können aber auch mit weiterem Formaldehyd, etwa im Sinne der Novolakbildung, umgesetzt werden, doch sollte der Formaldehydgehalt mit Rücksicht auf den Restformaldehydgehalt der Bindemittel nicht höher als 2,5 bis 5,0 Gew.-%, bezogen auf die Mannich-Base (A), gewählt werden.

Die Mannichkondensationsprodukte (A) werden zur Herstellung der erfindungsgemäßen Elektrotauchlackbindemittel in einer Menge von 40 bis 90 Gew.-%, vorzugsweise 50 bis 90 Gew.-%, mit 10 bis 60 Gew.-%, vorzugsweise 10 bis 50 Gew.-%, Epoxidharz (B) umgesetzt, wobei durch den Grad der Verätherung der phenolischen Komponenten ($a_1$ und $a_2$) mit dem Epoxidharz (B) insbesondere die Stabilitäts-, aber auch andere wesentliche Eigenschaften, wie z. B. die Spannungsfestigkeiten, beeinflußt werden können.

(B) Als Epoxidharze kommen die üblichen Polyepoxidverbindungen in Frage, vorzugsweise Polyepoxid-Verbindungen mit 2 bis 3 Epoxidgruppen im Molekül, wie z. B. Umsetzungsprodukte von mehrwertigen Phenolen, besonders solchen der unter ($a_1$) erwähnten Formel

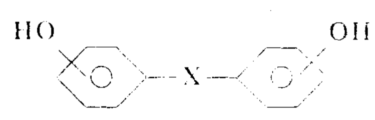

mit Epichlorhydrin, aber auch die oben erwähnten Reaktionsprodukte von mehrwertigen Alkoholen, wie z. B. Pentaerythrit, Trimethylolpropan oder Glycerin mit Epichlorhydrin. Geeignet sind alle gegebenenfalls Äthergruppen enthaltenden Di- oder Polyole, die nach der Einführung des Glcidylrestes noch freie OH-Gruppen besitzen oder völlig frei von alkoholischen OH-Gruppen sind. Weiterhin eignen sich epoxidgruppenhaltige Umsetzungsprodukte von Epoxidharzen mit sekundären Aminen oder hydroxylgruppenhaltigen Glykoläthern; ferner Epoxidharze, die Heteroatome, wie Schwefel, eingebaut enthalten. Ebenfalls geeignet sind die unter ($a_2$) genannten Epoxidharze sowie geblockte Urethangruppen-enthaltende Epoxidharze wie sie in der DE-A 25 54 080 und 25 41 801 beschrieben sind. Ganz allgemein sind alle Harzkörper geeignet, die 1,2-Epoxidgruppen enthalten und sich aus der Klasse der Polyacrylat-, Polyäther-, Polyester- und Polyurethan-Harze sowie von Polybutadien- und anderen Ölen herleiten.

Andere geeignete Harze mit Epoxidgruppen sind stickstoffhaltige Diepoxide, wie sie beschrieben sind in der US-A 3 365 471, Epoxyharze von 1,1-Methylen-bis-(5-substituiertem)-Hydantoin (US-A 3 391 097), Diepoxide aus Bis-Imiden (US-A 3 450 711), epoxydierte Aminomethyldiphenyloxide (US-A 3 312 664), aliphatische und heterocyclische N,N'-Diglycidylverbindungen (z. B. nach US-A 3 503 979), Aminoepoxyphosphonate (GB-A 1 172 916), 1,3,5-Triglycidylisocyanurate und andere in der Technik bekannte Materialien, die Epoxidgruppen enthalten.

Um die zur Harzbildung aus den Komponenten (A) und (B) bevorzugte höhere Funktionalität der Komponente (B) sicherzustellen, kann (B) gegebenenfalls mit Diisocyanaten, wie Hexamethylendiisocyanat, Toluylendiisocyanat oder Polyisocyanat umgesetzt werden. Beispielsweise können Epoxidverbindungen, die eine Epoxidgruppe besitzen, aber noch andere funktionelle Gruppen, z. B. OH-Gruppen, tragen, mit Diisocyanaten umgesetzt werden. Gegebenenfalls können die Epoxidharze mit partiell blockierten Di- und Polyisocyanaten weiterumgesetzt werden.

Für die erfindungsgemäßen Bindemittel ist es wesentlich, daß sie o-Alkanolaminomethylphenolreste, z. B. o-Diäthanolaminomethylphenolreste sowie gegebenenfalls Dialkylaminomethylphenolreste, enthalten.

Bei der Reaktion der Mannich-Base (A) mit den Epoxidharzen (B) kann als Hauptreaktion eine autokatalysierte Verätherung der phenolischen Hydroxylgruppen durch die Epoxidgruppen angenommen werden.

Das erfindungsgemäße, aus den Komponenten (A) und (B) erhaltene Umsetzungsprodukt ist im wesentlichen epoxidfrei und sollte zum Zeitpunkt der Verarbeitung nicht mehr als 0,5 Epoxidgruppen pro Molekül Umsetzungsprodukt enthalten. Gegebenenfalls können die nach der Herstellung des Bindemittels überschüssigen Epoxidgruppen durch Mercaptane und/oder Säuren entfernt werden.

Zusätze zu den erfindungsgemäßen Lackbindemitteln können die schon erwähnten Polybutadienöle oder andere Kohlenwasserstofföle

sowie blockierte Urethangruppen aufweisende Verbindungen sein, wie sie z. B. in DE-A 27 11 425 und DE-A 27 55 907 beschrieben worden sind. Außerdem sind Bindemittel nach De-A 26 06 831 geeignet. Die erfindungsgemäßen Lackbindemittel können mit üblichen Lacklösungsmitteln, wie Alkoholen, von einer Kettenlänge von $C_4$ bis $C_{16}$, z. B. Isopropanol, Dekanol, n- und iso-Butanol, Alkylaromaten, z. B. Toluol und Cycloaliphaten oder mit wäßrigen organischen Lösungsmittel(gemischen) verdünnt, gegebenenfalls zusammen mit Pigmenten, Füllstoffen und üblichen Hilfsmitteln unter Anwendung konventioneller Lackiermethoden, wie Spritzen, Tauchen, Fluten, auf das zu überziehende bzw. zu lackierende Substrat, wie z. B. auf Holz, Metall, Glas oder Keramik, aufgetragen, getrocknet und bei Temperaturen von über 170° C gehärtet werden. Die damit erhaltenen Überzüge zeichnen sich beispielsweise durch hohe Härte und Lösungsmittelbeständigkeit aus.

Bevorzugt werden die erfindungsgemäßen Lackbindemittel jedoch mit Säuren, wie z. B. Phosphorsäure und ihren Derivaten, vorzugsweise mit wasserlöslichen Carbonsäuren, wie z. B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden. Der Protonierungsgrad soll jedoch so gering wie möglich gehalten werden.

Die bevorzugte Verwendung der protonierten erfindungsgemäßen Lackbindemittel ist die kathodische Elektrotauchlackierung elektrisch leitender Flächen, z. B. von Metallteilen, Blechen usw. aus Messing, Kupfer, Aluminium, Eisen und Stahl, die gegebenenfalls chemisch vorbehandelt, z. B. phosphatiert, sind.

Die wäßrigen Lösungen oder Dispersionen der zumindest teilweise als Salz einer wasserlöslichen Carbonsäure vorliegenden erfindungsgemäßen Lackbindemittel können auch im Gemisch mit diesen durch Kataphorese elektrochemisch abscheidbare Hilfsstoffe enthalten, wie Pigmente, lösliche Farbstoffe, Lösungsmittel, Verlaufsverbesserer, Stabilisatoren, Härtungskatalysatoren, Antischaummittel sowie andere Hilfs- und Zusatzstoffe.

Die erfindungsgemäßen Lackbindemittel können sowohl als Hauptträgerharz für die elektrische Abscheidung als auch als Trägerharz in der Pigmentpaste benutzt werden. Alternativ kann das Harz als Hauptträgerharz für die elektrisch abzuscheidende Masse in Kombination mit einer üblichen Pigmentpaste verwendet werden. Außerdem kann das Harz Trägerharz in einer Pigmentpaste in Kombination mit einem bekannten polyamingruppenhaltigen Trägerharz für die kathodische elektrische Abscheidung verwendet werden. Die amingruppenhaltigen, kationisch abscheidbaren Harze sind bekannt und müssen deshalb nicht im einzelnen beschrieben werden. Beispiele von geeigneten Harzen schließen tertiäre aminsalzhaltige Harze ein, wie sie in der DE-A 26 03 666 offenbart sind und quaternäre ammoniumsalzgruppenhaltige Harze, wie sie in der US-A 3 839 252 beschrieben sind.

Zur kathodischen Elektrotauchlackierung wird im allgemeinen durch Verdünnen mit entionisiertem Wasser ein Feststoffgehalt des Elektrotauchbades von 5 bis 20 Gew.-% eingestellt. Die Abscheidung erfolgt im allgemeinen bei Temperaturen von 15 bis 40° C während einer Zeit von 1 bis 2 Minuten und bei Bad-pH-Werten von 6,0 bis 10,2, vorzugsweise pH 7,0 bis 9,5, bei Abscheidungsspannungen zwischen 50 und 500 Volt. Nach dem Abspülen des auf dem elektrisch leitenden Körper kathodisch abgeschiedenen Films wird dieser bei etwa 160 bis 220° C 10 bis 30 Minuten, vorzugsweise bei 180 bis 200° C 20 Minuten gehärtet.

Die erfindungsgemäßen Überzugsmittel ergeben bei der kathodischen Abscheidung Überzüge mit hervorragenden mechanischen Eigenschaften, wie große Härte und Kratzfestigkeit, bei sehr guter Elastizität und fester Haftung auf dem Substrat.

Weiterhin zeichnen sich die damit erhaltenen Überzüge durch hohe Lösungsmittelbeständigkeit und Beständigkeit im Salzsprühtest aus.

Die in den Beispielen genannten Teile und Prozent sind Gewichtsteile bzw. Gewichtsprozente.

Herstellung der phenolgruppenenthaltenden Butadienpolymerisate ($a_2$)

($a_{2.1}$) 456 Teile Bisphenol A und 250 Teile eines Polybutadienöls mit mehr als 90% 1,2-Doppelbindungen und einem Molekulargewicht von ca. 1100 werden auf 170° C aufgeheizt (unter Stickstoff). Dann werden 1,4 Teile p.Toluolsulfonsäure, gelöst in 4 Teilen Äthylglykol, zugesetzt. Da die Reaktion exotherm verläuft, muß gekühlt werden, um einen Temperaturbereich von 180 bis 190° C einzuhalten. Mit der Destillation unter vermindertem Druck zur Entfernung des gebildeten Phenols wird dann begonnen, wenn eine Probe des Reaktionsproduktes nach dem Abkühlen auf einer Glasscheibe klar bleibt. Nach der praktisch vollständigen Entfernung des Phenols wird das Harz mit 224 Teilen Isobutanol verdünnt. Der Festgehalt beträgt 70,7%.

($a_{2.2}$) Unter Verwendung eines Polybutadienöls mit einem Gehalt von 40 bis 50% 1,2-Doppelbindungen und 50 bis 60% 1,4-Doppelbindungen, davon 15 bis 25% cis-Struktur und 15 bis 25% trans-Struktur und 15 bis 20% cyclischer Struktur mit einem Molekulargewicht von ca. 1300 wird wie unter ($a_{2.1}$) beschrieben ein phenolgruppenenthaltendes Bindemittel hergestellt, wobei ein geringerer Temperaturanstieg beobachtet wurde. Nach dem Verdünnen mit 224 Teilen Isobutanol erhält man eine Harzlösung mit einem Festgehalt von 69,6%.

($a_{23}$) Unter Verwendung von 304 Teilen eines Polybutadienöls mit einem Gehalt von 20 bis 30% 1,2-Doppelbindungen und 70 bis 80% 1,4-Doppelbindungen, davon 20 bis 30% cis-Struktur und 40 bis 50% trans-Struktur mit einem Molekulargewicht von ca. 1500 wird aus 456 Teilen Bisphenol A wie unter ($a_{21}$) beschrieben ein Phenolgruppen enthaltendes Bindemittel hergestellt, wobei ebenfalls eine geringere Wärmtönung als bei ($a_{21}$) zu beobachten war. Nach dem Verdünnen mit 224 Teilen Isobutanol erhält man eine Harzlösung eines Festgehaltes von 69,6%. Die Jodzahl beträgt 200.

Beispiel 1

Herstellung der kationisch abscheidbaren Elektrotauchlackbindemittel

140 Teile Diäthanolamin, 103 Teile Di-n-butylamin, 194 Teile der Komponente ($a_{21}$), 170 Teile Bisphenol A und 72,5 Teile Paraformaldehyd in 107 Teilen Isobutanol werden 3 Stunden bei 80° C erhitzt. Anschließend werden 150 Teile eines Diglycidyläthers auf der Basis von Bisphenol A mit einem Epoxidwert von 0,2 und 277 Teile einer ca. 80%igen isobutanolischen Lösung des nach Beispiel Ba) der DE-A 25 41 801 gefertigten urethangruppenenthaltenden Epoxidharzes und 60 Teilen Isobutanol zugesetzt und 5 Stunden bei 70° C zur Reaktion gebracht. Die Bindemittellösung hat einen Festgehalt von 74%.

Zur Herstellung von 2 l eines 10%igen Elektrotauchbades werden 260 Teile des Bindemittels mit 2,6 Teilen Essigsäure (99%ig) protoniert und mit Wasser verdünnt (pH-Wert 8,3). Nach 2tägigem Rühren bei 25° C und Zugabe von 8 ml Isodekanol werden bei Abscheidungsspannungen zwischen 300 und 360 V/2 Min auf Zink- und Eisen-phosphatierten Stahlblechen und nach dem Einbrennen 20 Minuten/180° C glatte, 15 bis 16 µ dicke Beschichtungen erhalten.

Beispiel 2

125 Teile Diäthanolamin, 82,5 Teile Di-n-butylamin, 151,1 Teile Bisphenol A, 198,5 Teile Komponente ($a_{23}$), 72,5 Teile Paraformaldehyd und 180 Teile Isobutanol und 60 Teile Toluol werden 3 Stunden bei 80° C erhitzt. Anschließend werden 55 Teile Isobutanol, 114 Teile eines Diglycidyläthers auf der Basis von Bisphenol A mit einem Epoxidwert von 0,2, 60 Teile eines Glycidyläthers auf der Basis von Pentaerythrit mit einem Epoxidwert von 0,59 sowie 250 Teile einer 70%igen Lösung eines blockierte Isocyanatgruppen enthaltenden Epoxidharzes zugesetzt und 5 Stunden bei 70° C zur Reaktion gebracht. Das erfindungsgemäße Bindemittel hat einen Festgehalt von 74%.

Das für die letztgenannte Reaktion verwendete blockierte Isocyanatgruppen enthaltende Epoxidharz wurde wie folgt hergestellt:

516 Teile des obengenannten Glycidyläthers vom Epoxidwert 0,2 und 129 Teile des obengenannten Glycidyläthers vom Epoxidwert 0,59, gelöst in 90 Teilen Methylisobutylketon und 30 Teilen Toluol werden durch Destillation wasserfrei gemacht. Der praktisch lösungsmittelfreien Harzmischung werden 90 Teile wasserfreies Methylisobutylketon zugesetzt und anschließend 2 Stunden bei 80° C mit 518 Teilen halbblockierten Toluylendiisocyanats nach Beispiel Ba) der DE-A 25 41 801 zur Reaktion gebracht. Das isocyanatgruppenfreie Produkt wird anschließend mit 447 Teilen Äthylglykol verdünnt und weist einen Feststoffgehalt von 70% auf.

135 Teile des erfindungsgemäßen Bindemittels werden mit 1,5% Essigsäure (99%ig) protoniert und ergeben mit vollentsalztem Wasser auf 1 l verdünnt ein 10%iges Lackbad mit einem pH-Wert von 7,95.

Auf Zink- bzw. Eisen-phosphatierten Unterlagen werden bei 25° C und 150 V/2 Minuten Beschichtungen erhalten, die nach dem Aushärten (20 Minuten bei 180° C) glatte Filme von 16 bis 17 µ Schichtdicke ergeben.

Die Pendelhärte (nach König) beträgt 190, der Erichsenwert liegt bei 8,3 mm; der Schlagtest (gemessen mit dem Erichsen-Schlagtiefungsgerät) ergab beidseitig 18,08 J (160 inch · pound).

Die Korrosionsprüfung (Salzsprühtest nach DIN 50 021) nach 10 Tagen:

| | |
|---|---|
| auf ®Bonder 125: | 1 bis 2 mm |
| ®Bonder 127 WL: | 2 bis 3 mm |
| ®Bonder 101 WL: | 2 bis 3 mm. |

**Patentansprüche**

1. Im wesentlichen epoxidgruppenfreies Lackbindemittel, erhalten durch Umsetzung von

(A) Mannich-Basen aus
- ($a_1$) mindestens einem äthergruppenfreien kondensierten Phenol, das mindestens zwei phenolische Hydroxylgruppen pro Molekül enthält,
- ($a_3$) mindestens einem sekundären Amin, das mindestens eine Hydroxyalkylgruppe enthält, oder einem Gemisch aus einem derartigen sekundären Amin mit einem anderen sekundären Amin und
- ($a_4$) Formaldehyd oder einer Formaldehyd liefernden Verbindung

mit

(B) mindestens einem Epoxidharz,

dadurch gekennzeichnet, daß zur Herstellung der Mannich-Basen (A) zusätzlich mindestens

ein olefinische Doppelbindungen und mindestens eine

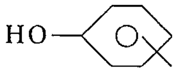 -Gruppe

pro Molekül enthaltendes Butadien- oder Isopren-homo- oder -copolymerisat ($a_2$) mitverwendet wird, wobei das der Komponente ($a_2$) zugrundeliegende Butadien- oder Isopren-homo- oder -copolymerisat ein mittleres Molekulargewicht zwischen 500 und 6000 aufweist, die Komponenten ($a_1$) und ($a_2$) im Verhältnis 1 : 0,05 bis 1 : 6 eingesetzt werden und das Lackbindemittel durch Umsetzung von 40 bis 90 Gew.-% der Komponente (A) mit 10 bis 60 Gew.-% der Komponente (B) erhalten wird und 0 bis 40 Gew.-% eines oder mehrerer weiterer Lackbindemittel enthält und sich die Gew.-% jeweils auf die Summe der Komponenten (A) und (B) beziehen.

2. Lackbindemittel nach Anspruch 1, dadurch gekennzeichnet, daß als Komponente ($a_2$) ein Umsetzungsprodukt verwendet wird, das durch Umsetzung von Polybutadienöl mit mehrkernigem Phenol in einem Mengenverhältnis von 1 : 0,2 bis 1 : 8 erhalten worden ist.

3. Lackbindemittel nach Anspruch 1 oder 2, dadurch gekennzeichnet, daß als Komponente ($a_2$) ein Umsetzungsprodukt aus einem Butadienhomo- oder -copolymerisat eines mittleren Molekulargewichts zwischen 500 und 6000 mit einem mehrkernigen Phenol der allgemeinen Formel

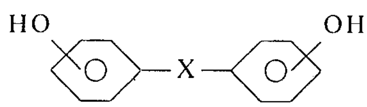

wobei die Hydroxylgruppen in ortho- und/oder para-Stellung zu X stehen und X einen geradkettigen oder verzweigten zweiwertigen aliphatischen Rest mit 2 bis 8 Kohlenstoffatomen bedeutet, das in Gegenwart eines sauren Katalysators erhalten worden ist, verwendet wird.

4. Lackbindemittel nach einem der vorhergehenden Ansprüche, dadurch gekennzeichnet, daß die Komponente ($a_3$) Diäthanolamin oder ein Gemisch aus Diäthanolamin und einem anderen sekundären Amin ist.

5. Lackbindemittel nach einem der vorhergehenden Ansprüche, dadurch gekennzeichnet, daß die Komponente ($a_2$) ein Umsetzungsprodukt aus einem 1,2-Doppelbindungen enthaltenden Polybutadienöl und Bisphenol A ist.

6. Lackbindemittel nach einem der vorhergehenden Ansprüche, dadurch gekennzeichnet, daß als Komponente (B) ein Epoxidharz eingesetzt wird, welches blockierte Isocyanatgruppen enthält.

7. Lackbindemittel nach einem der vorhergehenden Ansprüche, dadurch gekennzeichnet, daß als Mannich-Base (A) ein Umsetzungsprodukt verwendet wird, zu dessen Herstellung auf jedes Äquivalent phenolischer Hydroxylgruppen des Gemisches der Komponenten ($a_1$) und ($a_2$) 0,3 bis 2,0 Mole der Komponente ($a_3$) und mindestens 1 Mol der Komponente ($a_4$) pro Mol der Komponente ($a_3$) eingesetzt worden sind.

8. Lackbindemittel nach einem der vorhergehenden Ansprüche, dadurch gekennzeichnet, daß es in üblicher Weise mit einer Säure protoniert ist.

9. Verwendung der Lackbindemittel nach Anspruch 8 für die kathodische Elektrotauchlackierung elektrisch leitender Oberflächen.

**Claims**

1. A surface-coating binder, substantially free from epoxide groups, which has been obtained by reacting

(A) a Mannich base obtained from
   ($a_1$) at least one condensed phenol, free from ether groups, which contains at least two phenolic hydroxyl groups per molecule,
   ($a_3$) at least one secondary amine which contains at least one hydroxyalkyl group, or a mixture of such a secondary amine with another secondary amine, and
   ($a_4$) formaldehyde or a formaldehyde donor
with
(B) at least one epoxy resin,

characterized in that, for the production of the Mannich base (A), at least one butadiene or isoprene homopolymer or copolymer ($a_2$) which contains olefinic double bonds and at least one

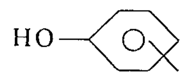 -group

per molecule is additionally used, the butadiene or isoprene homopolymer or copolymer on which component ($a_2$) is based having a mean molecular weight of from 500 to 6000, components ($a_1$) and ($a_2$) are employed in a ration of 1 : 0.05 to 1 : 6, and the surface-coating binder is obtained by reacting 40 to 90% by weight of component (A) with 10 to 60% by weight of component (B) and contains 0 to 40% by weight of one or more other surface-coating binders, and the percentages by weight refer in each case to the sum of components (A) and (B).

2. A surface-coating binder as claimed in claim 1, characterized in that a reaction product which has been obtained by reacting a polybutadiene oil with a polynuclear phenol in a ratio of from 1 : 0.2 to 1 : 8 is used as component ($a_2$).

3. A surface-coating binder as claimed in claim 1 or 2, characterized in that there is used as component ($a_2$) a reaction product of a butadiene homopolymer or copolymer, having a mean molecular weight of from 500 to 6000, with a

polynuclear phenol of the general formula

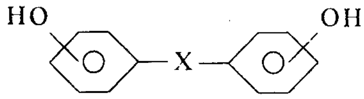

where the hydroxyl groups are in the ortho- and/or paraposition to X, and X is a straight-chain or branched divalent aliphatic radical of 2 to 8 carbon atoms, the reaction product having been obtained in the presence of an acid catalyst.

4. A surface-coating binder as claimed in any of the preceding claims, characterized in that component ($a_3$) is diethanolamine or a mixture of diethanolamine and another secondary amine.

5. A surface-coating binder as claimed in any of the preceding claims, characterized in that component ($a_2$) is a reaction product of a polybutadiene oil, containing 1,2-double bonds, and bisphenol A.

6. A surface-coating binder as claimed in any of the preceding claims, characterized in that an epoxy resin which contains blocked isocyanate groups is used as component (B).

7. A surface-coating binder as claimed in any of the preceding claims, characterized in that the Mannich base (A) is a reaction product which has been prepared by using, per equivalent of phenolic hydroxyl groups of the mixture of components ($a_1$) and ($a_2$), from 0.3 to 2.0 moles of component ($a_3$) and at least 1 mole of component ($a_4$) per mole of component ($a_3$).

8. A surface-coating binder as claimed in any of the preceding claims, characterized in that it has been conventionally protonized with an acid.

9. Use of the surface-coating binder as claimed in claim 8 for the cathodic electrocoating of electrically conductive surfaces.

**Revendications**

1. Liant pour vernis essentiellement exempt de groupes époxy, préparé par la réaction

A) de bases de Mannich dérivées
   - $a_1$) d'au moins un phénol, exempt de groupes éther et comprenant au moins deux groupes hydroxyle phénoliques par molécule, condensé;
   - $a_3$) d'au moins une amine secondaire comprenant au moins un groupe hydroxy-alcoyle, ou d'un mélange d'une telle amine et d'une autre amine secondaire et
   - $a_4$) du formaldéhyde ou d'un composé formant du formaldéhyde,

et

B) d'au moins une résine époxy,

caractérisé en ce que les bases de Mannich A sont préparées en employant au moins un homo- ou co-polymére du butadiène ou de l'isoprène $a_2$), contenant des doubles liaisons oléfiniques et au moins un groupe

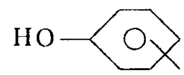

par molécule et possédant un poids moléculaire moyen compris entre 500 et 6000, les proportions des composants $a_1$) et $a_2$) sont dans un rapport compris entre 1 : 0,05 et 1 : 6 et le liant pour vernis, préparé par la réaction de 40 à 90% (pourcentages en poids par rapport à la somme des composants A et B) du composant A avec 10 à 60% du composant B, contient entre 0 et 40% d'un ou de plusieurs autres liants pour vernis.

2. Liant pour vernis suivant la revendication 1, caractérisé en ce que le composant $a_2$) est le produit de la réaction d'une huile de polybutadiène et d'un phénol polycyclique dans des proportions pondérales dans un rapport compris entre 1 : 0,2 et 1 : 8.

3. Liant pour vernis suivant l'une des revendications 1 et 2, caractérisé en ce que le composant $a_2$) est le produit de la réaction d'un homo- ou d'un co-polymère du butadiéne d'un poids moléculaire moyen entre 500 et 6000 et d'un phénol polycyclique de la formule générale

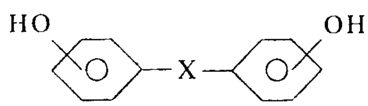

dans laquelle les groupes hydroxyle se trouvent en position ortho et(ou) para par rapport à X et X représente un pont aliphatique bivalent à chaîne droite ou ramifiée en $C_2$ à $C_8$, la réaction étant effectuée en présence d'un catalyseur acide.

4. Liant pour vernis suivant l'une des revendications précédentes, caractérisé en ce que le composant $a_3$) est la diéthanol-amine ou un mélange de diéthanol-amine et d'une autre amine secondaire.

5. Liant pour vernis suivant l'une des revendications précédentes, caractérisé en ce que le composant $a_2$) est le produit de la réaction d'une huile de polybutadiène avec des doubles liaisons en position 1,2 et du bisphénol A.

6. Liant pour vernis suivant l'une des revendications précédentes, caractérisé en ce que le composant B est une résine époxy comportant des groupes isocyanate bloqués.

7. Liant pour vernis suivant l'une des revendications précédentes, caractérisé en ce que la base de Mannich est préparée par la mise en oeuvre de 0,3 à 2,0 moles du composant $a_3$) par équivalent de groupes hydroxyle phénoliques du mélange des composants $a_1$) et $a_2$) et d'au moins 1 mole du composant $a_4$) par mole du composant $a_3$).

8. Liant pour vernis suivant l'une des revendications précédentes, caractérisé en ce qu'il est protoné de façon usuelle par un acide.

9. Utilisation d'un liant pour vernis suivant la revendication 8 dans des vernis destinés à l'électrovernissage cathodique de surfaces conductrices de l'électricité.